# EUROPEAN PATENT APPLICATION

(11) **EP 2 359 945 A1**
(43) Date of publication of application: **24.08.2011**
(21) Application number: 09826152.2
(22) Date of filing: 13.11.2009
(51) Int. Cl.: B09B 3/00, B02C 17/20, B09B 5/00

(54) **MILLED ELECTRONIC APPLIANCE**

(30) Priority: 17.11.2008 JP 2008293284
(71) Applicant: National Institute for Materials Science, Tsukuba-shi, Ibaraki 305-0047 (JP)
(72) Inventor: HARADA Komei, Tsukuba-shi Ibaraki 305-0047 (JP); IJIMA Kiyoshi, Tsukuba-shi Ibaraki 305-0047 (JP); YAMAGUCHI Hitoshi, Tsukuba-shi Ibaraki 305-0047 (JP); SUGAWARA Naoyuki, Saitama-shi Saitama 338-0012 (JP)
(74) Representative: Manley, Nicholas Michael
(86) International application number: PCT/JP2009/069323
(87) International publication number: WO 2010/055906

(57) **Abstract**

Problem to be Solved

The present invention has an object to substantially eliminate the need for or significantly reduce disassembling and selecting operations of an electronic device into components.

Solution

The present invention provides a crushed object of an electronic device that is obtained by crushing waste including an electronic device using a mill, including: crushed particles having a particle size less than a predetermined size; and crushed pieces having a size equal to or more than the predetermined size, wherein a TMR index of the crushed particle is twice or more a TMR index of the waste. In the crushed object of an electronic device, among the crushed pieces, 90% or more of all the crushed pieces have a size twice or more the predetermined size. In the crushed object of an electronic device, among the crushed pieces, 70% or more of all the crushed pieces have a size four times or more the predetermined size. In the crushed object of an electronic device, the predetermined size is 1 mm. The present invention also provides a selected and recovered object that is obtained by selecting, according to sizes, a crushed object obtained by crushing an electronic device using a mill, wherein the selected and recovered object is obtained by selecting and recovering crushed particles having a size equal to or less than a predetermined size from a crushed object of an electronic device according to any of the above.

## Description

### Technical Field

The present invention relates to a crushed object that is obtained by crushing waste including an electronic device using a mill, and more particularly to a technique of increasing recovery efficiency of a rare element contained in the electronic device.

### Background Art

Conventionally, almost all waste of automobiles, mobile phones, automatic dispensers, Japanese pinball machines, personal computers, TV sets, video game machines, and other devices having automatic functions include electronic devices. The electronic devices contain rare elements such as noble metal like gold, silver or platinum, or rare-earth elements.

Since the rare elements are rare and collected only in a limited amount from natural mines, an attempt has been made to use the waste as urban mines for recovering rare elements and recover and recycle rare elements such as noble metal like gold, silver or platinum, or rare-earth elements (Patent Literatures 1 and 4).

From a TMR index (an index indicating a concentration of a contained element shown in Table 3) indicating a concentration of a contained rare element, urban mines provide rare elements with a higher concentration than natural mines. Thus, it seems to be much more efficient to obtain rare elements from urban mines than natural mines.

In increasing resource risks, significance of using "urban mine" accumulation potential in Japan has been increasingly recognized. However, although there is a possibility of "urban mines", we have not found "veins" thereof, and many used products are still scattered as scattered stocks that are not recycled and cannot be recovered.

Efforts for rare metal recycling from products have been enhanced at national, government, and corporate levels and further an individual level, but a connected chain state as resource recycling has not yet been formed.

One reason for the difficulty is that rare metal recycling from products generate a much larger amount of waste to be treated than an amount of rare metal obtained by the recycling. In order to establish a business model such that economies that form a recycling chain divide gains obtained by recovery of rare metal while bearing treatment cost of the waste, a recycling chain needs to be formed by a connection of considerably inexpensive processes.

For example, for price of bullion of rare metal contained in a used electronic device board, gains by rare metal recovery for one board are much lower than those generally expected, and it is apparent that minimizing process cost is significant.

In current recycling system development, many pinpoint selection and extraction techniques of preferentially removing valuables have been developed rather than considering a reduction in the entire process cost. Although the development of this technique is significant, it is actually difficult to surpass an option of "manual selection by cheap labor" in selection and extraction.
Patent Document 1 Japanese Patent No. 3878996
Patent Document 2 Japanese Patent Application No. 2003-412660
Patent Document 3 Japanese Patent Laid-Open No. 2004-216287
Patent Document 4 Japanese Patent Laid-Open No. 2000-294919

### Disclosure of the Invention

### Problems to be Solved by the Invention

The inventor, Harada had an idea that in order to surpass the "manual selection by cheap labor", there is no choice other than that dismantling-oriented design that finally allows dismantling of a machine is made by product design and the design is managed as a recycling chain like a supply chain, and conceived that in current used product recycling in Japan where the design is incomplete, it is necessary to prepare a mixed-material processing process instead of a selection and extraction process.

The mixed-material treatment process is based on processing of natural ores. Natural ores contain target elements and many other elements as byproducts. Current smelting technology is superior in separating and removing the elements, and particularly Japan has cutting-edge technology in the world. Thus, the inventor decided to develop a technique for a low-cost process that allows production of materials containing a large amount of rare metal, so-called "urban ores" that can be easily smelted.

Specifically, with the following objects of development:
1) use of human cognitive ability and separation ability is minimized;
2) processing from a recovered state is easy;
3) operating cost is low and environmental cost is low to allow urban location; and
4) processing of a product in a subsequent stage is easy,
this time, the inventor decided to show such possibilities at a laboratory level and provide one example of technical development of "urban ore" production.

In view of such circumstances, the present invention has an object to substantially eliminate the need for or significantly reduce disassembling and selecting operations of an electronic device into components.

### Means for Solving the Problems

The invention 1 provides a crushed object of an electronic device that is obtained by crushing waste including an electronic device using a mill, including: crushed particles having a particle size less than a predetermined size; and crushed pieces having a size equal to or more than the predetermined size, wherein a TMR index of the crushed particle is twice or more a TMR index of the waste.

The invention 2 provides the crushed object of an electronic device in the invention 1, wherein among the crushed pieces, 90% or more of all the crushed pieces have a size twice or more the predetermined size.

The invention 3 provides the crushed object of an electronic device in the invention 2, wherein among the crushed pieces, 70% or more of all the crushed pieces have a size for times or more the predetermined size.

The invention 4 provides the crushed object of an electronic device in any one of the inventions 1 to 3, wherein the predetermined size is 1 mm.

The invention 5 provides a selected and recovered object that is obtained by selecting, according to sizes, a crushed object obtained by crushing an electronic device using a mill, wherein the selected and recovered object is obtained by selecting and recovering crushed particles having a size equal to or less than a predetermined size from a crushed object of an electronic device according to any one of the inventions 1 to 4.

### Advantages of the Invention

According to the present invention, even if waste including an electronic device is crushed without being disassembled into components, crushed particles having a higher TMR index can be easily obtained as compared to a manual disassembling operation.

Thus, a recovery operation of urban mines can be performed without requiring a disassembling operation of waste that has been conventionally required, thereby significantly increasing operational efficiency.

In particular, as in the inventions 2, 3 and 4, for the crushed object including the crushed particles containing most of rare elements and other crushed pieces having the different sizes, a sizing operation can be easily performed without requiring accuracy, thereby further increasing operational efficiency.

It is not clear why the crushed object is generated, but this seems to be related to the fact that most of the rare elements contained in the electronic device are contained in a crystallized inorganic material, and other portions are made of an organic material such as plastic.

Since the inorganic material is generally hard and easily crushed as compared to the organic material, and further, the crystallized inorganic material is more easily crushed, it is supposed that the inorganic material is more quickly crushed and fined than the organic material by crushing using a mill.

The present invention allows "urban ores" to be produced by a simple method of a ball mill method, and shows that there is still enough room for development of an inexpensive process technique for producing "urban ores".

Only for the method of the present invention, a simple crushing process for crushing waste to a size that can be fed may be provided in a previous stage, and the process can be conveniently introduced. Also, the crushed particles can be increased in concentration or separated by floatation or winnowing, and be directly wet-dissolved in a post process, and thus rare metal other than copper-based rare metal can be separated and recovered by a byproduct.

Further, this process by itself does not require heat, water or a solvent, thereby significantly reducing cost for consideration for surrounding environment, and allowing location near urban areas from which used products are often generated.

Also, in terms of a feature of a ball mill, a scale of an apparatus may be set in accordance with a scale of recovery, thereby allowing distributed processing in various areas. Further, for products, powder crushed particles and plate-like objects are both increased in bulk density, thereby providing an advantage in transportation or subsequent processing. The present invention has such merits, and is advantageous for the development of "urban miners" of used products, and is useful for producing a small distributed type system.

### Best Mode for Carrying Out the Invention

Although general metal concentration criteria of "urban ore urban concentrates" have not been determined, chemical analysis values of contained metal components and TMR coefficients indicating a degree of rareness of each metal can be used for numerical indication.

Table 2 shows an example thereof, and it is apparent from an analysis value of particular metal, for example, gold (Au) that a gold content in an electronic mounting board of a mobile phone before processing is 6.8 mg in 21g and 0.33%, while a gold content in a crushed object by the present invention is 1.4% and a degree of concentration increases several times. On the other hand, metal in electronic device waste is not limited to particular metal, and sometimes include tantalum, cobalt, or platinum group metal. In such a case, it is insufficient to evaluate a degree of concentration from a content of particular metal such as gold.

A TMR (Total Material Requirement) coefficient is also referred to as an ecological rucksack indicating an amount (kg) of natural resource required for obtaining metal of 1 kg, and reflects a degree of rareness of each metal. An amount of component of contained metal is weighted by the TMR coefficient to allow determination of a degree of concentration of metal with high degree of rareness without limited to particular metal.

For an unprocessed mobile phone as waste, a TMR index is 122, while for crushed powder in an example, a TMR index is 1044, and it is apparent that a high degree of concentration of rare metal is obtained.

As shown in Table 2, assuming virtual natural ore having an extraction lower limit concentration of natural ore, a TMR index of a component of the virtual natural ore weighted by the TMR coefficient is 69 per gram. If the TMR index exceeds 500 per gram, it is regarded that a concentration of "urban ores (urban concentrates)" is obtained exceeding natural ores with high quality.

In the present invention, crushed particles concentrated twice the TMR index of waste is obtained to eliminate trouble in a crushing process that has been a conventional problem and use the crushing process for concentration of the waste, thereby allowing concentration of useful atoms by crushing to be performed in the crushing process.

Further, the crushed particles are mainly obtained by crushing inorganic material components, while the crushed pieces are organic material components such as resin, thereby obtaining crushed objects with a large difference in size.

The crushed particles and the crushed pieces may have sizes less and more than 1 mm, respectively, but because of differences in materials of waste, the numerical value may be adjusted within a range of 0.5 to 2 mm depending on shapes or the numbers of crushers used, a rotational speed or a crushing time in crushing, or the like.

The crushed pieces have a different size from the crushed particles, and both can be easily selected.

In particular, when 90% or more of the crushed pieces have a size twice or more a maximum size of the crushed particles, or 70% or more of the crushed pieces have a size four times or more thereof, almost 100% of recovery efficiency of crushed particles in the crushed object is obtained.

As a mill used in the present invention, a conventionally known ball mill or gear mill is basically used to crush an electronic device. As the ball mill, besides a planetary mill and a rolling mill, a stirring mill, a vibration mill or the like similarly have a mechanism of crushing an object by mutual motions of crushers, and the same advantage is expected.

Such mills are conventionally used for obtaining crushed pieces (particles) all having a predetermined size or less. In the present invention, processing is completed when crushed particles (hereinafter referred to as high-content particles) are obtained having a twofold concentration of rare elements contained in crushed waste (TMR index: Index of Total Materials Requirement (TMR). Total materials requirement of a material of 1 g).

In carrying out the present invention, using crushers having different sizes is effective for changing sizes of crushed objects containing useful atoms and others.

In an example below, three types of crushers are used, but four or five types of crushers may be used.

Also, shapes of the crushers are not limited to a spherical shape, but it is effective to change shapes of crushers used such as partially use deformed or rectangular crushers.

A method of calculating an optimum crushing time is illustrated by an attempt.

An object to be crushed is not limited to a portable phone, an electronic medium such as a USB memory or an SD card, or a small electronic device such as a liquid crystal camera or a portable audio device, but a home TV set, a DVD recorder, a personal computer, and related devices thereof may be processed by being coarsely crushed to a size that can be inserted into a mill.

Since both crushing and peeling of a joined portion occur besides powdering, a separation effect from a secured portion of different types of materials is expected for devices with a low content of rare metal such as an AC adaptor or a drier, thereby further simplifying a dismantling operation.

In the ball mill, the crusher and a ball mill pot may be made of metals such as stainless, high-chrome steel, other iron alloys or carbide alloy, also ceramics such as alumina or zirconia, combinations thereof, and further, compound particles having a high crushing property such as silicon carbide may be used in a small diameter crusher.

A shown deformed crusher having a corner can be used as a crusher to efficiently obtain high-content particles, and quickly produce the crushed object of the present invention.

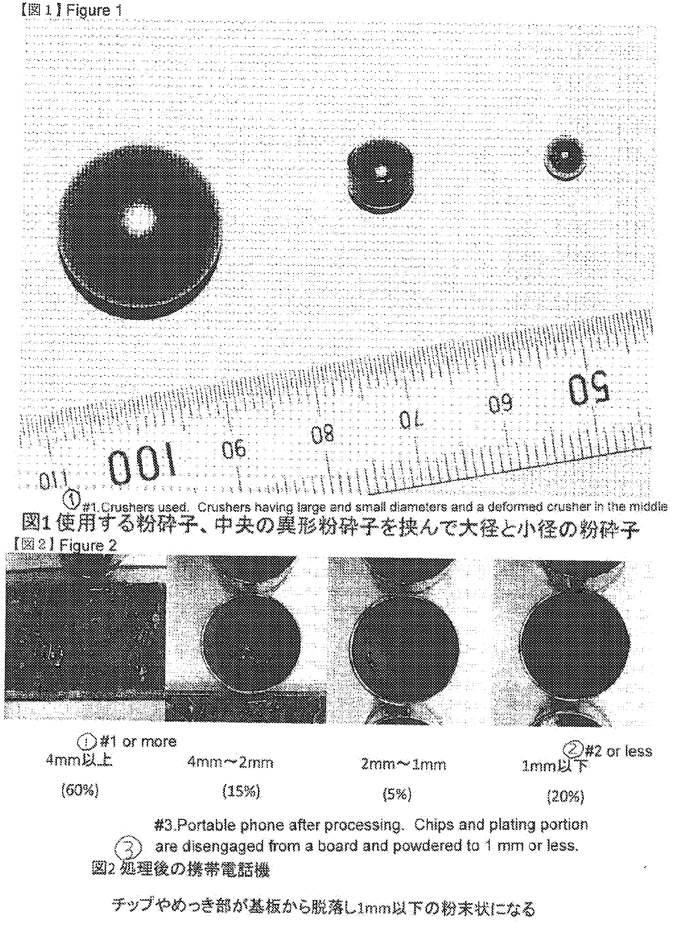

Besides the shape shown in Figure 1, the deformed crusher may have various shapes such as an echinulate shape or an angular shape that can apply an irregular impact unlike a spherical shape. One or both of large and small spherical crushers may be deformed crushers.

The following mills are used in the examples below.

### 1) Planetary ball mill

Manufacturer: FRITSCH
Model number: 05.20.1
Rated voltage: 110 V
Maximum electric power: 0.55 KW (without load)
Current in use: 4.3 A (5 turns), 6.1 A (7 turns)
The number of turns: 0 to 360 turns
Turning ratio: revolution (table) 1: rotation (pot) 2

### 2) Rolling ball mill

Manufacturer: TERAOKA
Model number: 8KFD-203
Rated voltage: 200 V
Power consumption: 750 W
Electric power in use: 0.88 A
Turning frequency: 0 to 60 Hz

### [Example 1]

This experiment was performed using a planetary mill (pot diameter of 100 mm) with a current of 6.1 A for confirmation as an example.

For crushers (balls), 908 balls including large balls (18 mmφ) and small balls (4.7 mmφ) were used with a volume ratio of 1:2.

As a sample, a real portable phone was cut to about 10 mm² pieces so as to be insertable into a pot and crushed.

A processing time was five hours maximum, and the ball mill was opened midstream for observation and measurement.

Weights for sizes of obtained samples are as shown in Table 1. Selection of size was performed by dry shaking sieving.

**[Table 1]**

| Crushing time | 0h | 1h | | 2h | | 5h | |
|---|---|---|---|---|---|---|---|
| Size (mm) | | g | wt% | g | wt% | g | wt% |
| Less than 0.25 | | 0.021 | 0.04% | 0.005 | 0,01% | 0.011 | 0.02% |
| 0.25 to less than 0.5 | | 0.376 | 0.73% | 0.325 | 0.64% | 0.906 | 1.77% |
| 0.5 to less than 1.0 | | 5.128 | 10.01% | 8.792 | 17.23% | 13.845 | 27.03% |
| Less than 1.0 total | | | 10.79% | | 17.88% | | 28.82% |
| 1.0 to less than 2.0 | | 2.547 | 4.97% | 3.349 | 6.56% | 3.641 | 7.11% |
| 2.0 or more total | | | 84.24% | | 75.56% | | 64.07% |
| 2.0 to less than 4.0 | | 5.021 | 9.81% | 5.172 | 10.14% | 7.152 | 13.96% |
| 4.0 or more | | 38.114 | 74.43% | 33.378 | 65.42% | 25.666 | 50.11% |
| Total | 51.225 | 51.207 | 100.00% | 51.021 | 100.00% | 51.221 | 100.00% |

For the processed mobile phone, as shown in Figure 2, a structure material portion and a board material of aluminum or plastic remain substantially in unchanged shape, chips or the like mounted to a surface of the board material are disengaged from the board material and further crushed into particles less than 1 mm.

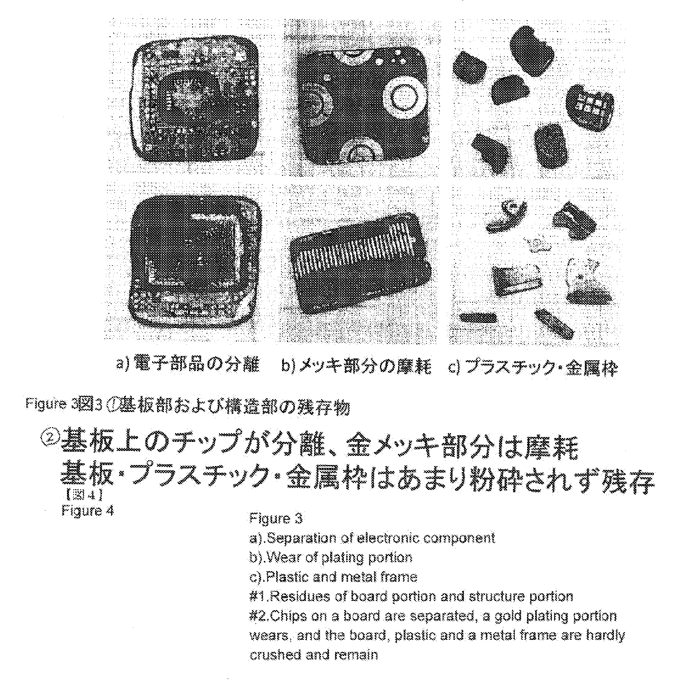

In the residues of the mounting board and the structure material portion, as shown in Figure 3, electronic components such as chips on the board are separated and plating is also disengaged. On the other hand, the board or aluminum or plastic having a structure material property somewhat wear but basically remain in unchanged shapes. Thus, it is effective for separating a structure material such as aluminum, plastic, or a board material and functional rare metal such as golds silver, palladium, or tantalum contained in the chips or plating from an electronic device such as a portable phone.

In an intermediate process (2h), chips crushed before disengagement were confirmed as in the lower left in Figure 3, and it is confirmed that preferential crushing of chips or the like may be used, besides in a joined portion,

Figure 4 shows time changes of particle size distribution of 4 mm or less. As the processing progresses, powder becomes finer, and disengaged chips are crushed and about 30% of the total chips have a size of 1 mm or less. The chips are not only disengaged and crushed but also powdered by an effect of the ball mill. This facilitates extraction of rare metal in powder in a post processing process.

Table 2 shows a TMR index relating to particles (high-content particles) of 1 mm or less in two-hour crushing in Table 1, TMR coefficients relating to a portable phone A (portable A) fed in the crushing experiment shown in Table 1 and a portable phone B (portable B) and natural ores, and contents and TMR indexes of rare elements.

Table 3 shows a list of TMR coefficients.

**[Table 2]**

| TMR | | One lower limit | | Portable phone A | | Portable phone B | | High-content particle | |
|---|---|---|---|---|---|---|---|---|---|
| | | Content | TMR index | Content | TMR index | Content | TMR index | Content | TMR index |
| Element | TMR coefficient | | 89 | | 462 | | 176 | | 1102 |
| Mg | 70 | | 0 | | 0 | 337×10⁻⁴ | 2359×10⁻³ | 16×10⁻³ | 11×10⁻¹ |
| Al | 48 | 15×10⁻² | 72×10⁻¹ | 9×10⁻² | 432×10⁻² | 34×10⁻⁴ | 1632×10⁻⁴ | 38×10⁻³ | 18×10⁻¹ |
| Si | 34 | | 0 | | 0 | | 0 | 127×10⁻³ | 42×10⁻¹ |
| p | 220 | | 0 | | 0 | | 0 | 8×10⁻³ | 2×10⁻⁰ |
| Ca | 90 | | 0 | | 0 | | 0 | 13×10⁻³ | 12×10⁻¹ |
| Ti | 36 | 2×10⁻² | 7207×10⁻⁴ | 2×10⁻³ | 7207×10⁻³ | | 0 | 2×10⁻² | 7×10⁻¹ |
| V | 1,500 | | 0 | | 0 | | 0 | 24×10⁻⁵ | 4×10⁻³ |
| Cr | 26 | 2×10⁻¹ | 52×10⁻¹ | 9×10⁻³ | 234×10⁻³ | 62×10⁴ | 1612×10⁻⁴ | 2×10⁻² | 5×10⁻³ |
| Mn | 14 | 3×10⁻¹ | 4163×10⁻³ | | 0 | 4×10⁻⁴ | 5551×10⁻⁶ | 8×10⁻⁴ | 1×10⁻² |
| Fe | 8 | 25×10⁻² | 2045×10⁻³ | 8×10⁻² | 6544×10⁻⁴ | 666×100⁻⁴ | 5447×10⁻⁴ | 106×10⁻³ | 85×10⁻² |
| Co | 600 | | 0 | | 0 | | 0 | 9×10⁻⁴ | 55×10⁻² |
| Ni | 260 | 1×10⁻² | 26×10⁻¹ | 1×10⁻² | 26×10⁻¹ | 74×10⁻⁴ | 1924×10⁻³ | 33×10⁻³ | 85×10⁻¹ |
| Cu | 360 | 4×10⁻³ | 1438×10⁻³ | 19×10⁻² | 6835×10⁻² | 1178×10⁻⁴ | 4237×10⁻² | 67×10⁻³ | 241×10⁻¹ |
| Zn | 36 | 3×10⁻² | 1079×10⁻³ | 7×10⁻³ | 2519×10⁻⁴ | 4×10⁻⁴ | 1439×10⁻⁵ | 27×10⁻⁴ | 1×10⁻⁴ |
| Ga | 14,000 | | 0 | | 0 | 4×10⁻⁴ | 56×10⁻¹ | 58×10⁻⁶ | 8×10⁻¹ |
| As | 29 | | 0 | | 0 | | 0 | 92×10⁻⁴ | 26×10⁻² |
| Br | 1,500 | | 0 | | 0 | | 0 | 48×10⁻⁴ | 72×10⁻¹ |
| Sr | 500 | | 0 | | 0 | | 0 | 67×10⁻⁴ | 38×10⁻¹ |
| Y | 2,700 | | 0 | | 0 | | 0 | 38×10⁻⁵ | 89×10⁻² |
| Zr | 550 | | 0 | | 0 | | 0 | 9×10⁻⁴ | 5×10⁻⁴ |
| Nb | 640 | | 0 | | 0 | | 0 | 4×10⁻⁵ | 25×10⁻³ |
| Mo | 750 | 1×10⁻³ | 75×10⁻² | | 0 | | 0 | 25×10⁻⁵ | 19×10⁻² |
| Pd | 810,000 | | 0 | | 0 | 423×10⁻⁷ | 3426×10⁻² | 16×10⁻⁶ | 133×10⁻¹ |
| Ag | 4,800 | 1×10⁻⁴ | 48×10⁻² | 2×10⁻³ | 96×10⁻¹ | 114×10⁻⁶ | 5472×10⁻⁴ | 14×10⁻⁴ | 68×10⁻¹ |
| Sn | 2,500 | 2×10⁻³ | 5 | 1×10⁻² | 25×10⁻⁰ | | 0 | 48×10⁻⁴ | 12×10⁻⁰ |

**[Table 3]**

| Element | TMR coefficient | | Element | TMR coefficient | | Element | TMR coefficient | | Element | TMR coefficient |
|---|---|---|---|---|---|---|---|---|---|---|
| Li | 1,500 | | Co | 600 | | In | 4,500 | | Yb | 34.000 |
| Be | 2,500 | | Ni | 260 | | Sn | 2,500 | | Lu | 220,000 |
| B | 140 | | Cu | 360 | | Sb | 42 | | Hf | 10,000 |
| F2 | 210 | | Zn | 36 | | Te | 270,000 | | Ta | 6,800 |
| Na | 50 | | Ga | 14,000 | | 12 | 45,000 | | W | 190 |
| Mg | 70 | | Ge | 120,000 | | Cs | 11 | | Re | 20,000 |
| A1 | 48 | | As | 29 | | Ba | 510 | | Os | 540,000 |
| Si | 34 | | Se | 70 | | La | 3,500 | | lr | 400,000 |
| P2 | 220 | | Br2 | 1,500 | | Ce | 1,700 | | Pt | 520,000 |
| S | 520 | | Rb | 130 | | Pr | 12,000 | | Au | 1,100,000 |
| C12 | 52 | | Sr | 500 | | Nd | 3,000 | | Hg | 2,000 |
| K | 54 | | Y | 2,700 | | Sm | 14,000 | | TI | 450 |
| Ca | 90 | | Zr | 550 | | Eu | 54,000 | | Pb | 28 |
| Sc | 2,000 | | Mo | 750 | | Gd | 15,000 | | Bi | 180 |
| Ti | 36 | | Ru | 80.000 | | Tb | 100,000 | | Ra | 280,000,000 |
| V | 1.500 | | Rh | 2,300,000 | | Dy | 19,000 | | Th | 9,000 |
| Cr | 26 | | Pd | 810,000 | | Ho | 80,000 | | U | 22,000 |
| Mn | 14 | | Ag | 4,800 | | Er | 30,000 | | | |
| Fe | 8 | | Cd | 7 | | Tm | 240,000 | | | |

Details of TMR will be apparent from the reference below.

Estimated total materials requirement of metal: HARADA Kohmei, IJIMA Kiyoshi, KATAGIRI Nozomu, and OKURA Takahiko: Journal of Japan Institute of Metals, vol. 65, No. 7 (2001), 564-570 Element strategy outlook "Material and fully alternative strategy": National Institute for Materials Science

### [Example 2]

### Experiment for confirming disengagement state of chips

Only a board to which chips are mounted was processed and changes in an intermediate process were checked to confirm states of disengagement and crushing of the chips.

A simple object including only one IC chip mounted to a board and only a board material and only an aluminum plate were fed into a rolling mill to confirm that the chips can be disengaged and crushed without the board being crushed.

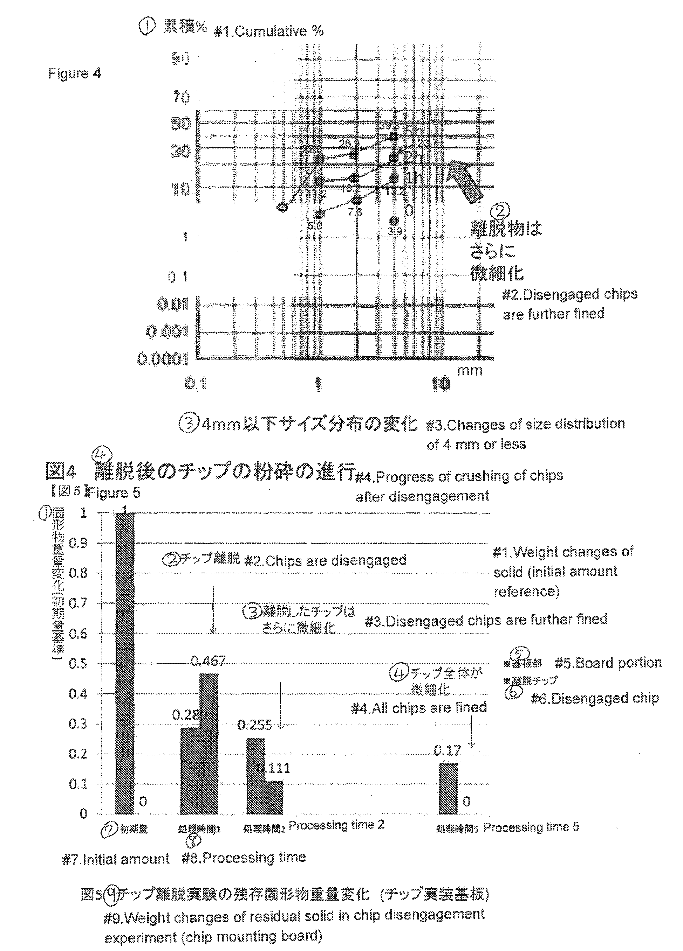

Figure 5 shows the results thereof, and the chips are disengaged in one-hour processing and recognized as solids separated from the board. As time further passes, the chips are crushed and reduced in weight and finally fully powdered although there is a slight change in weight by wear of the board portion.

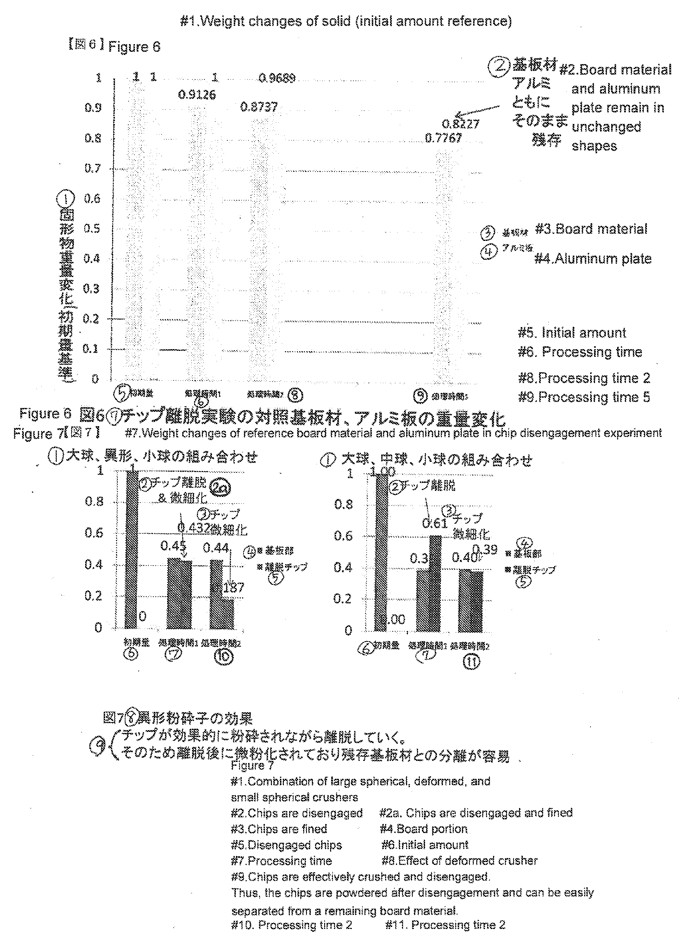

As shown in Figure 6, a board material to which no chips are mounted and an aluminum plate were processed under the same condition. However, there was a slight change in weight, and the board material and the aluminum plate were not crushed in the processing and merely reduced in weight by wear, and it was confirmed that most of the board material and the aluminum plate can remain as solids.

### [Example 3]

### Advantage of deformed crusher

Simultaneously with the processing described above (Figure 5), only a board material to which no chips were mounted and only an aluminum plate were fed to check changes in weight. Damage and powdering rates thereof were low, and mixing of powder into the board material and the structure material could be minimized.

Using a non-spherical deformed crusher can apply an irregular impact to an object in collision of a ball. Thus, chips mounted in a joined state to a board can be also broken from other than a joined portion to facilitate disengagement from the board. As an example thereof, a chip-mounted board was processed using a combination of large spherical crushers, deformed crushers (having the shape shown in the middle in Figure 1) , and small spherical crushers (ratio of the number of crushers: 1:12:25, the number of crushers used: 302), and a combination of all spherical crushers of three types including large spherical crushers, small spherical crushers, and middle spherical crushers (diameter: 12 mmΦ) (ratio of the number of crushers: 1:5.4:25, the number of crushers used: 251) instead of the deformed crushers at electric power of 670 W, and disengagement states of the chips were compared.

Figure 7 shows the results thereof, and the chips are crushed by the combination of the large, deformed, and small crushers and disengaged from the board and effectively powdered. The chips are effectively crushed and disengaged. Thus, it is apparent that the chips are powdered after disengagement and can be easily separated from the remaining board material.

### [Example 4]

### Example by rolling ball mill

Even if a USB memory is processed by a rolling ball mill, the USB memory is disassembled in the mill and chips and plating are disengaged from a board and powdered.

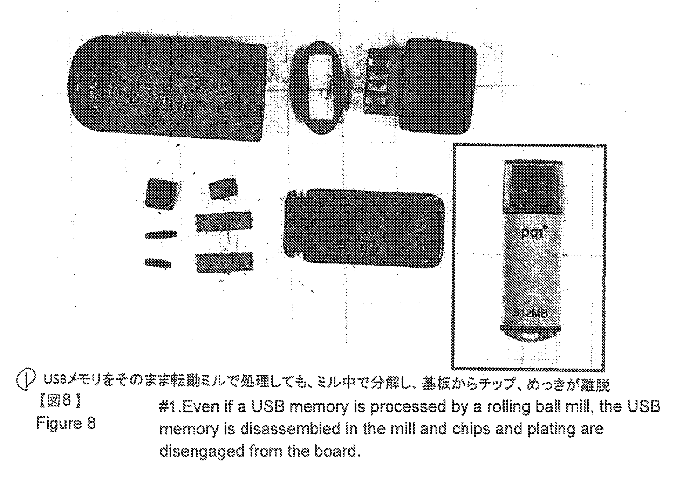

In a rolling ball mill (electric power: 176 W, the number of balls used: 216) that can process a larger number of electronic components than a planetary ball mill, does not require high speed rotation and can minimise input of electric power, it was confirmed that electronic components such as chips mounted to a board were separated and powdered using the combination of the large, middle, and deformed crushers shown in Example 3. A USB memory device was used as a sample, and fed in a state in using (right in Figure 8). Figure 8 shows a state after 12-hour processing, and a rigid USB memory device was dismantled and a mounting board portion is exposed. From a mounting board, electronic components such as chips were disengaged and powdered. This shows that the technique is also effective for the rolling mill.

### [Example 5]

For the deformed crusher, the one shown in Figure 1 and also those shown in Tables 4 to 6 can be used.

**[Table 4]**

| No. | Feature of deformed crusher | Figure | Fabrication method of crusher described in left Column | Function in crushing by use |
|---|---|---|---|---|
| 1 | Structure with fine abrasive powder on an entire surface of a sphere | Figure 9 | Fabrication method 1: Abrasive powder is placed in a spherical metal mold, compression molded, and then sintered, Fabrication method 2: Abrasive power and an adhesive are mixed and placed in a spherical Mold, solidified and molded. (The metal mold is a split mold) | An electronic component on a surface of a board is worn and powdered. |
| 2 | Structure with many cylindrical projections on a surface of a sphere, the projection having a smaller diameter than the sphere | Figure 10 | A casting mold having an inner surface of the shape in the left column is used for casting | The cylindrical projections on the surface provide irregular motion of a ball to promote motion of other balls. An impact is applied to a board electronic component to promote a breaking effect. |
| 3 | Structure with semicircular projections wrapping a surface of a sphere | Figure 11 | Same as the above | The projections on the surface provide irregular motion of a ball to promote motion of other balls. An impact is applied to a board electronic component to promote a breaking affect. |
| 4 | Structure with two spheres integrated on one side | Figure 12 | Same as the above | As compared with a single ball, the crusher has more points in contact with a board to increase the number of impacts applied to an electronic component, Change in curvature on the surface provides irregular motion of a ball to promote motion of other balls. |
| 5 | Structure with many strip steps formed in a surface of a sphere | Figure 13 | Saute is the above | The steps provide irregular motion of other balls. Corners of a ball apply an impact to an electronic component on a surface of a board. |
| 6 | Structure with a plurality of ribs formed on surface of a sphere so as to surround the surface | Figure 14 | Same as the above | The ribs on the surface provide irregular motion of a ball |
| 7 | With many conical projections on a surface of a sphere | Figure 15 | Same as the above | The projections provide irregular motion of a ball, and apply an impact to an electronic component on a board. |
| 8 | Semispherical shape | Figure 16 | Fabrication method 1: Fabricated using a casting mold having an inner surface of the shape in the left column Fabrication methode 2: A sphere is cut into two pieces | Irregular motion is provided to a ball. |
| 9 | Structure with one or more belt-like protrusions on a surface of a sphere so as to surround the surface | Figures 17, 18 and 19 | Fabricated using a casting mold having an inner- surface of the shape in the left column | irregular motion is provided to a ball. Corners of the belt-like protrusion (s) cut an electronic component on a board |

**[Table 5]**

| No. | Feature of deformed crusher | Figure | Fabrication method of crusher described in left column | Function in crushing buy use |
|---|---|---|---|---|
| 11 | wich ribs having parallel central lines on an arcuate surface of a cylindrical body | Figure 21 | Fabrication method 1: Fabricated by cutting a circular bar iron and steel material to a desired length Fabrication method 2: Fabricated using a casting mold having an inner surface of the shape in the left column | Irregular motion is provided to a ball. The ribs on the surface apply an impact to an electronic component on a board. |
| 12 | Generally barrel shape with opposite ends of c3 cylindrical body having small diameters | Figure 22 | Fabricated using a casting mold having ain inner surface of the shape in the left. column | Irregular section is provided to a ball. |
| 13 | Structure with upper and lower disks connected by a shaft having a small diameter 14 Generally conical shape A truncated conical shape in Figure 25 to 27 | Figure 23 Figures 24, 25, 26 and 27 | Same as the above | Corners of the disks apply an impact to an electronic component on a board. Irregular motion is provided to other balls. A vertex of a cone and a corner or a bottom apply an impact to an electronic component on electronic component on a board, irregular motion is provided to a ball. The truncated conical shape reduces wear, |
| 15 | Bullet shape with a partially spherical top and a cylindrical lower portion | Figure 28 | Same as the above | Irregular motion is provided to a ball. |
| | 16 Shape with a sphere and a cylinder having a smaller diameter than the sphere, the cylinder being connected to one side of the sphere | Figure 29 | Same as the above | Irregular motion is provider to a ball. |
| | 17 Mushroom shape | Figure 30 | Same as the above | Irregular motion is provided to a ball. |
| 18 | To one end of a cylinder, a cylinder having a smaller diameter than that is concentrically joined. | Figure 31 | Fabrication method 1: Fabricated using a casting mold having an inner surface of the shape in the left column Fabrication method 2: Circular bar materials having different diameters are cut and joined by welding. | Irregular motion, is provided to a ball. |
| 19 | Cymbal shape with disks stacked with raised centers directed upward and downward | Figure 32 | Fabricated using a casting mold having an inner surface of the shape in the left column | Irregular motion is provided to a ball. |
| 20 | Football shape | Figure 33 | Fabricate using a casting mold having an inner surface of the shape in the left column | Irregular motion is provided to a ball. |
| 21 | Buckled cylindrical shape | Figure 34 | Fabricated by cutting, axially pressurizing and compressing a circular bar material | Irregular, motion is provided to a ball. |
| 22 | Structure with disks stacked so as to have gradually decreasing diameters | Figure 35 | Fabricated using a casting mold having an inner surface of the shape in the left column | Irregular motion is provided to a ball. |
| 23 | Prism shape | Figures 36, 38 and 39 | A prism bar steel material having each sectional shape is cut. | Corners apply an impact to an electronic component on a board. Irregular motion is provided to other balls. |

**[Table 6]**

| No. | Feature of deformed crusher | Figure | Fabrication method of crusher described in left column | Function in crushing by use |
|---|---|---|---|---|
| 25 | Truncated polyhedron Figure 41: Truncated octahedron Figure 42: Truncated hexahedron | Figure 41, 42 and 44 | Fabricated using a casting mold having an inner surface of the shape in the left column | Corners apply an impact to an electronic component on a board. Irregular motion is provided to a ball. |
| 26 | Cross shape | Figures 45 and 47 | fabrication method 1: Fabricated by tutting a steel bar having a cross-shaped section Fabrication method 2: Fabricated using a casting mold having an inner surface of the shape in the left column | Corners apply an impact to an electronic component on a board. Irregular motion is provided to a ball. |
| 2'7 | Rounded triangular shape | Figures 46 | Fabrication method 1: Fabricated by cutting a triangular steel bar Fabrication method 2: Fabricated using a casting mold having an inner surface of the shape in the left column | Corners apply an impact to an electronic component an a board. Irregular motion is provided to a ball. |
| 28 | Y shape | Figures 48 | Fabrication method 1: Fabricated by cutting a steel bar having a y-shaped section Fabrication method 2: Fabricated using a casting mold having an inner surface of the shape in the left: column | Corners apply an impact to an electronic component on a board. Irregular motion is provided to a ball. |
| 29 | V shape | Figures 49 | Fabrication method 1: Fabricated by cutting a steel bar having a V-shaped section Fabrication method 2; Fabricated, using a casting mold having an inner surface of the shape in the left Column | Corners apply an impact to an electronic component on a board. Irregular motion is provided to a ball. |
| 30 | Corrugated shape | Figures 50 | Fabrication method 1: Fabricated, by cutting a steel bar having a corrugated section Fabrication method 2: Fabricated using a casting mold having an inner surface of the shape in the left column | Corners apply an impact to an electronic component on a board. Irregular motion is provided to a ball. |
| 31 | Comma shape | Figures 51 | Fabricated using a cashing mold having an inner surface of the shape in the left column | Irregular motion is provided to a ball. |
| 32 | Gourd shape | Figures 52 | Same as the above | Rounded corners apply an impact to an electronic component on a board. Irregular motion is provided to a ball. |
| 33 | Green bean shape | Figures 53 | Fabrication method 1: Fabricated using a casting mold having an inner surface of the shape in the left column Fabrication method 2: Fabricated by stretching and irregularly cutting a heated material | Irregular motion is provided to a ball. |
| 34 | Egg shape | Figure 54 | Fabricated using a Casting mold having an inner surface of the shape in the loft column | Irregular motion is provided to a ball. |
| 35 | Block shape with uneven surface | Figures 55 | Same as the above | An uneven surface applies an impact to an electronic component on a board. Irregular motion is provided to a ball. |
| 36 | Doughnut shape | figures 56 | Fabrication method 1: Fabricated using a casting mold having an inner surface of the shape in the left column | Irregular motion is provided to a ball, |

### Brief Description of the Drawings

Figure 1 is a photograph showing a combination example of balls (crushers) in Example 1;
Figure 2 is a photograph showing a result of processing, crushing and sizing a mobile phone in Example 1;
Figure 3 is a photograph showing residuals of a board portion and a structure portion in an intermediate process in Example 1;
Figure 4 is a graph showing a progress of crushing of disengaged chips in Example 1;
Figure 5 is a graph showing weight changes of residual solid in a chip disengagement experiment (chip mounting board) in Example 2;
Figure 6 is a graph showing weight changes of a reference board material and an aluminum plate in a chip disengagement experiment in Example 3;
Figure 7 is a graph showing an effect of a deformed crusher in Example 3;
Figure 8 is a photograph showing a result of an USB memory processing experiment by a rolling ball mill in Example 4;

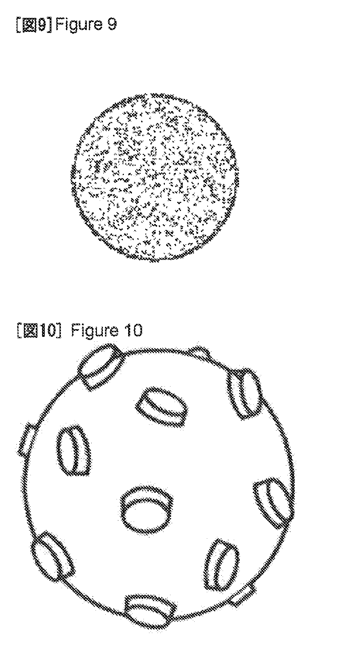

Figure 9 is a front, view showing 1 in Example 5;
Figure 10 is a front view showing 2 in Example 5;

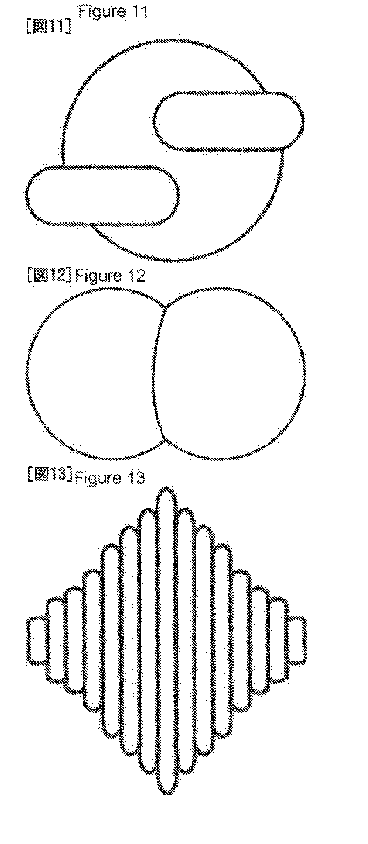

Figure 11 is a front view showing 3 in Example 5;
Figure 12 is a perspective view showing 4 in Example 5;
Figure 13 is a front view showing 5 in Example 5;

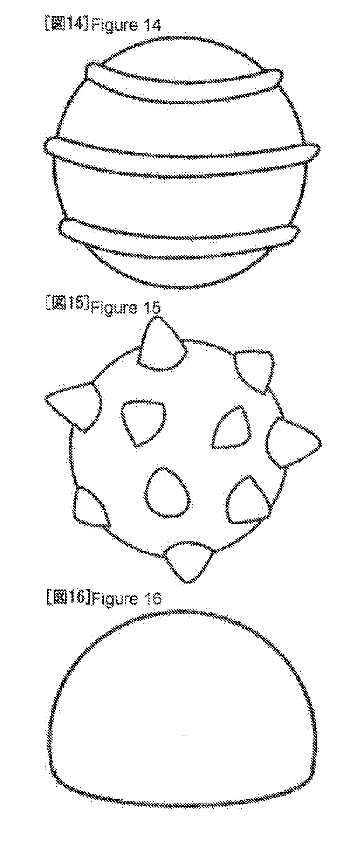

Figure 14 is a perspective view showing 6 in Example 5;
Figure 15 is a front view showing 7 in Example 5;
Figure 16 is a perspective view showing 8 in Example 5;

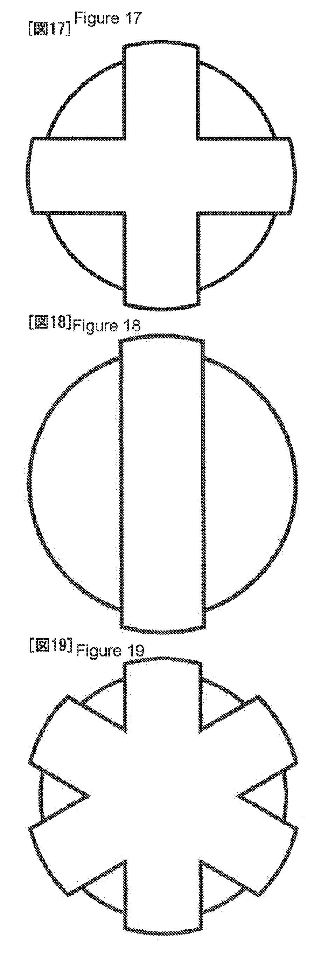

Figure 17 is a front view showing 8 in Example 5;
Figure 18 is a front view showing 8 in Example 5;
Figure 19 is a front view showing 9 in Example 5;

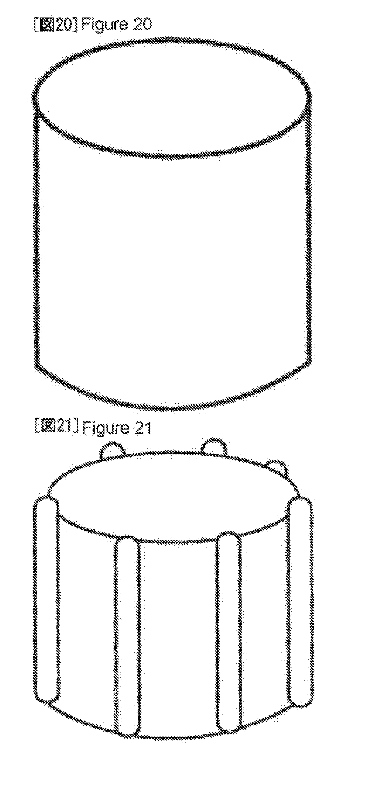

Figure 20 is a perspective view showing 10 in Example 5;
Figure 21 is a perspective view showing 11 in Example 5;

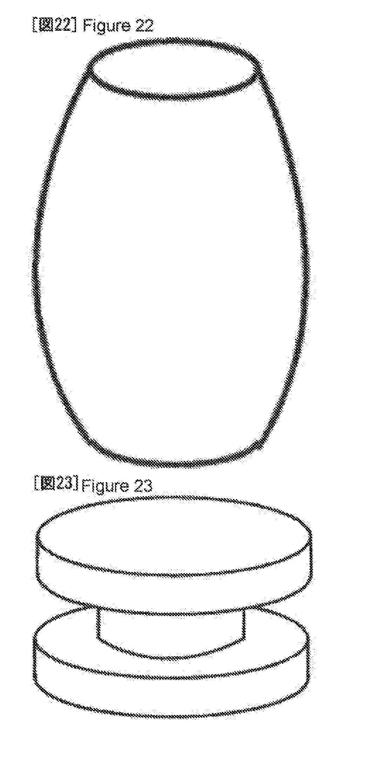

Figure 22 is a perspective view showing 12 in Example 5;
Figure 23 is a perspective view showing 13 in Example 5;

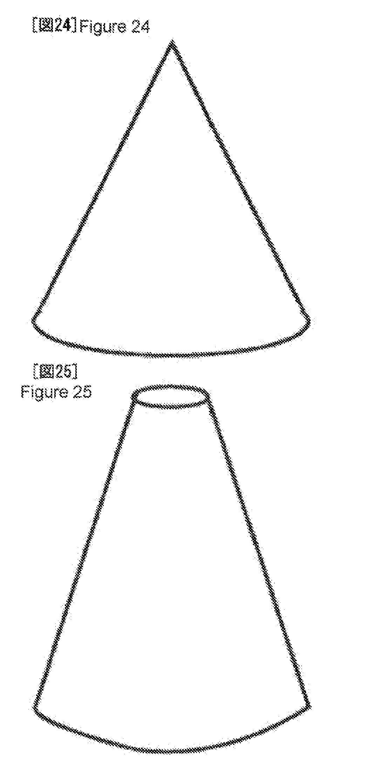

Figure 24 is a perspective view showing 13 in Example 5;
Figure 25 is a perspective view showing 13 in Example 5;

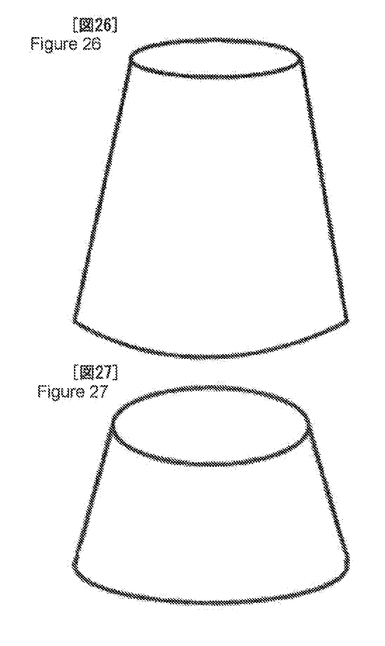

Figure 26 is a perspective view showing 13 in Example 5;
Figure 27 is a perspective view showing 14 in Example 5;

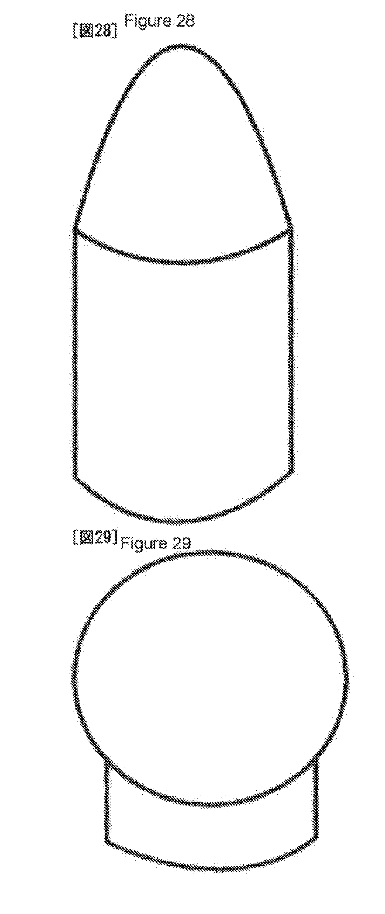

Figure 28 is a perspective view showing 15 in Example 5;
Figure 29 is a perspective view showing 16 in Example 5;

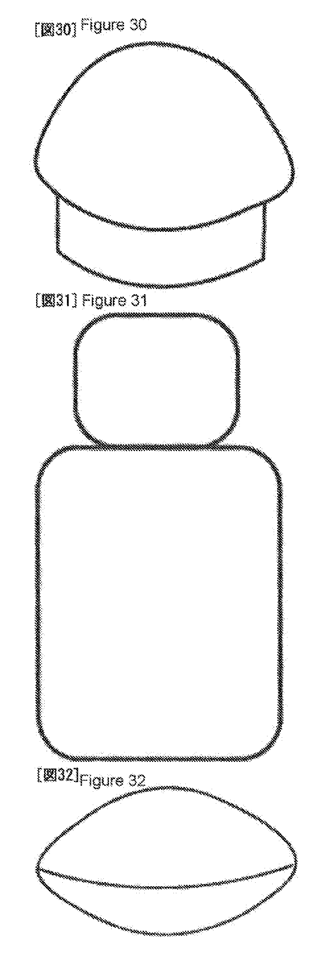

Figure 30 is a perspective view showing 17 in Example 5;
Figure 31 is a front view showing 18 in Example 5;
Figure 32 is a perspective view showing 19 in Example 5;

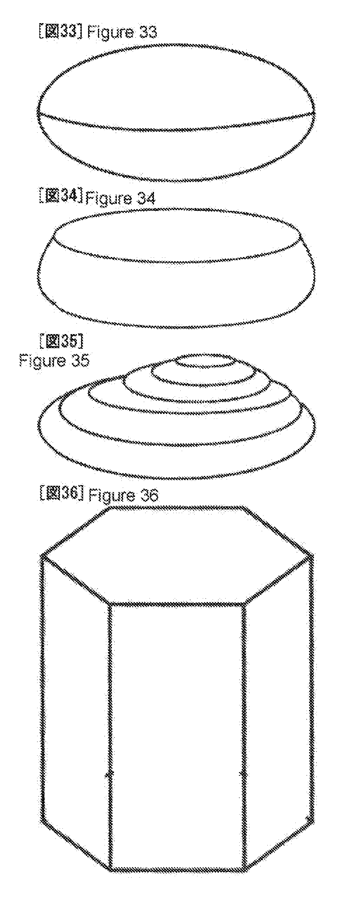

Figure 33 is a perspective view showing 20 in Example 5;
Figure 34 is a perspective view showing 21 in Example 5;
Figure 35 is a perspective view showing 22 in Example 5;
Figure 36 is a perspective view showing 22 in Example 5;

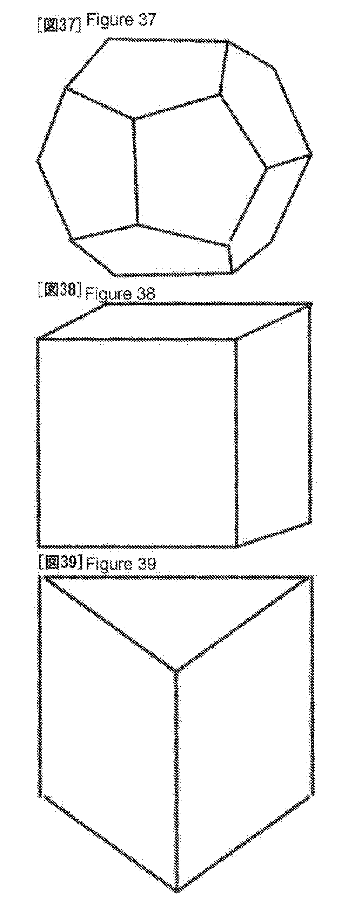

Figure 37 is a perspective view showing 23 in Example 5;
Figure 38 is a perspective view showing 22 in Example 5;
Figure 39 is a perspective view showing 23 in Example 5;

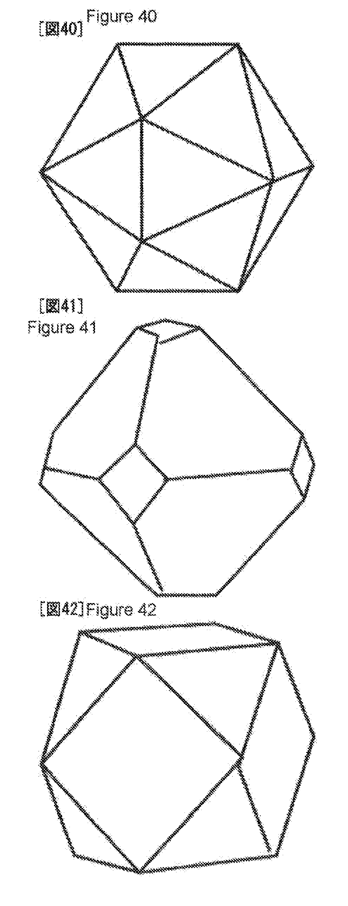

Figure 40 is a perspective view showing 23 in Example 5;
Figure 41 is a perspective view showing 24 in Example 5;
Figure 42 is a perspective view showing 24 in Example 5;

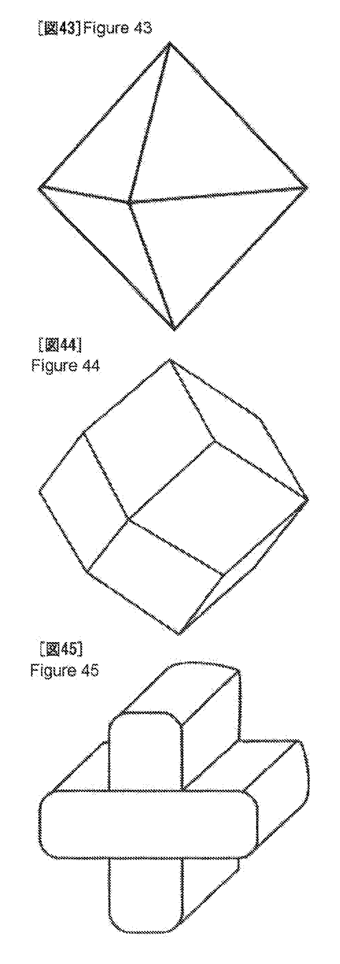

Figure 43 is a perspective view showing 24 in Example 5;
Figure 44 is a perspective view showing 25 in Example 5;
Figure 45 is a perspective view showing 25 in Example 5;

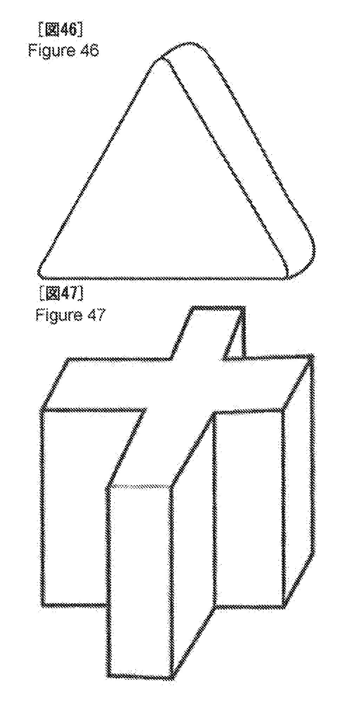

Figure 46 is a perspective view showing 27 in Example 5;
Figure 47 is a perspective view showing 26 in Example 5;

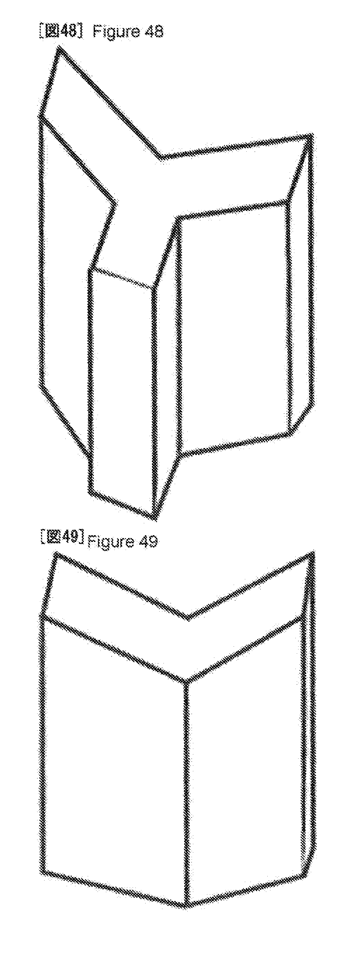

Figure 48 is a perspective view showing 28 in Example 5;
Figure 49 is a perspective view showing 29 in Example 5;

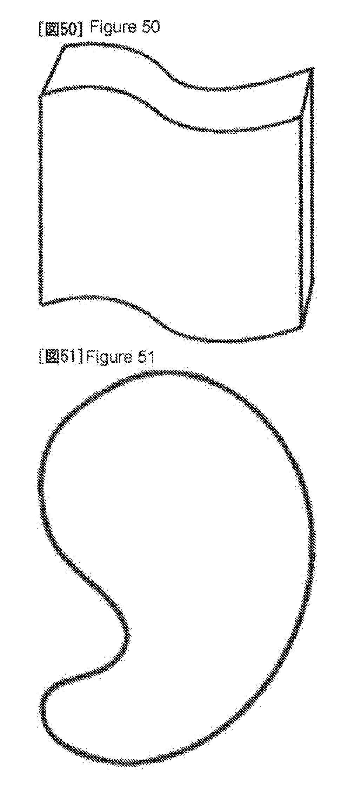

Figure 50 is a front view showing 30 in Example 5;
Figure 51 is a front view showing 31 in Example 5;

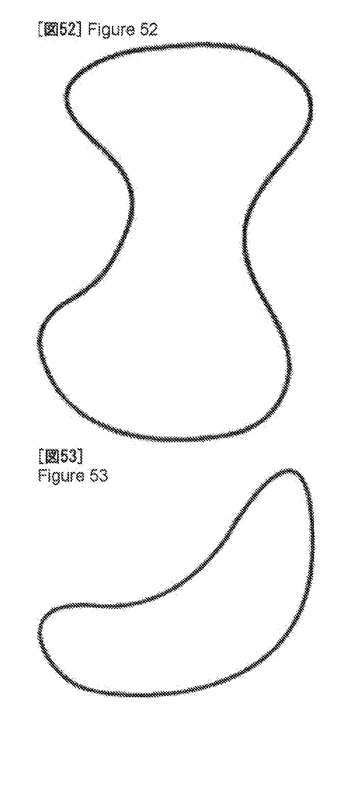

Figure 52 is a front view showing 32 in Example 5;
Figure 53 is a front view showing 33 in Example 5;

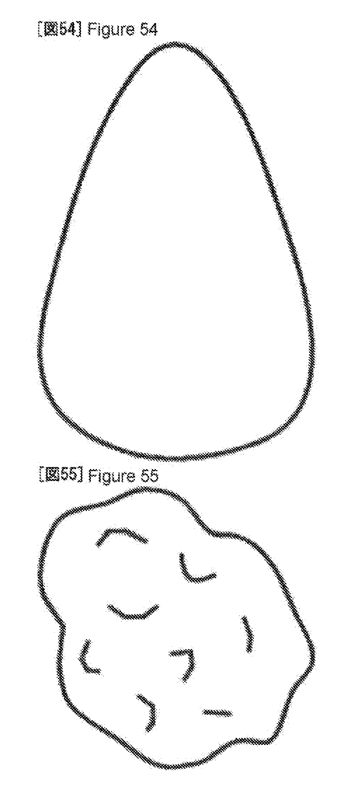

Figure 54 is a front view showing 34 in Example 5;
Figure 55 is a front view showing 35 in Example 5;

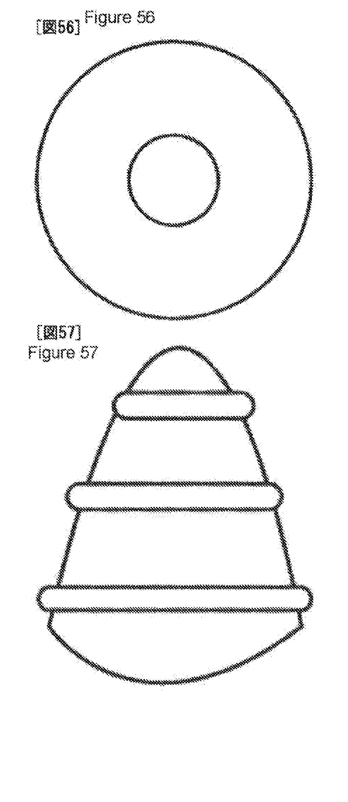

Figure 56 is a front view showing 36 in Example 5; and
Figure 57 is a perspective view showing 37 in Example 5.

## Claims

1. A crushed object of an electronic device that is obtained by crushing waste including an electronic device using a mill, including:
crushed particles having a particle size less than a predetermined size; and
crushed pieces having a size equal to or more than the predetermined size,
wherein a TMR index of the crushed particle is twice or more a TOR index of the waste.

2. The crushed object of an electronic device according to claim 1, wherein among the crushed pieces, 90% or more of all the crushed pieces have a size twice or more the predetermined size.

3. The crushed object of an electronic device according to claim 2, wherein among the crushed pieces, 70% or more of all the crushed pieces have a size four times or more the predetermined size.

4. The crushed object of an electronic device according to any one of claims 1 to 3, wherein the predetermined size is 1 mm.

5. A selected and recovered object that is obtained by selecting, according to sizes, a crushed object obtained by crushing an electronic device using a mill,
wherein the selected and recovered object is obtained by selecting and recovering crushed particles having a size equal to or less than a predetermined size from a crushed object of an electronic device according to any one of claims 1 to 4.
